# EUROPEAN PATENT SPECIFICATION

(11) **EP 3 099 104 B1**
(45) Date of publication and mention of the grant of the patent: **03.07.2019**
(21) Application number: 15305833.4
(22) Date of filing: 29.05.2015
(51) Int. Cl.: H04W 28/26

(54) **A METHOD FOR RESERVATION OF A PORTION OF A SUBSCRIBER DATA ALLOCATION AND A COMPUTER PROGRAM PRODUCT**
VERFAHREN ZUR RESERVIERUNG EINES TEILS EINER TEILNEHMERDATENZUWEISUNG UND COMPUTERPROGRAMMPRODUKT
PROCÉDÉ DE RÉSERVATION D'UNE PARTIE D'UNE ATTRIBUTION DE DONNÉES D'ABONNÉ ET PRODUIT LOGICIEL

(43) Date of publication of application: 30.11.2016
(73) Proprietor: Alcatel Lucent, 91620 Nozay (FR)
(72) Inventor: SODHI, Jaisanpreet Singh, New Delhi 110018 (IN); Sachdeva, Aneet Kaur, 122016 Gurgaon (IN)
(74) Representative: Bryers LLP

(56) References cited:
- EP-A1- 2 343 853
- US-A1- 2012 250 621
- US-A1- 2013 016 667
- US-B1- 6 961 323
- US-B1- 8 296 810

## Description

### TECHNICAL FIELD

Aspects relate, in general, to a method for reservation of a portion of a subscriber data allocation.

### BACKGROUND

User equipment, such as smart phones or computing devices for example, can be provided with a predefined data allocation for voice and data usage in a wireless telecommunication network. For example, a subscriber can have a preset monthly data allowance that enables him to avail of data services up to limits provided by the service to which he subscribes. Data services can include email and web browsing, as well as download based services such as video and music consumption as well as video conferencing and so on.

Once a data allowance has been used, the user may be able to purchase additional data allowance, or may have to wait until the next cycle when the existing subscription refreshes and the data allowance is restored.

Often, data usage notifications can be provided to a subscriber in order to indicate when a certain percentage of a data allowance has been exhausted. However, subscribers are typically not able to control data usage to any significant degree, which, in view of an upcoming anticipated high data usage event like a long video conference call and so on, can be problematic.

US2012/0250621A1 relates to a wireless communication apparatus including a control unit performing a connection rights reservation request for wirelessly connecting to a predetermined network in a specific region in a specific time band.

US8296810B1 relates to a wireless video uplink system that includes a reservation system which determines if a selected wireless access system has available video uplink capacity during a time period requested by a user.

US2013/0016667A1 relates to a system imposed throttled transmission, in which a processor receives a request for a transmission reservation emanating from a client application at a wireless terminal. A transmission reservation grantor is configured to use transmission rules stored for the wireless terminal to determine whether to grant or deny the request. If granted, the transmission is monitored for compliance with the rules and to control bandwidth used for the transmission operation.

US patent, US6961323B1 discloses a technique where a subscriber of a multiple access communication network is permitted to make a reservation to guarantee availability of a shared physical communication resource, such as a cellular radio telephone traffic channel, at an appointed date, time and location.

### SUMMARY

According to an example, there is provided a method comprising transmitting a request for reservation message from user equipment using a command-and-control protocol, the message providing a request to preserve a portion of subscriber data allocation for a future data session, providing an acknowledgement to the request for reservation message, the acknowledgement including data representing a query for parameters associated with the request, providing an indication of the parameters of the request in response to the query, determining the validity of the indicated parameters for the request, and reserving the portion of subscriber data allocation according to the indicated parameters for the future data session.

The command-and-control protocol can be the Unstructured Supplementary Service Data, USSD, protocol, and wherein the request for reservation message can be a network specific USSD string.

The command-and-control protocol can be an interactive voice response, IVR, protocol or the request for reservation message can be executed using web-based service. The parameters associated with the request can include the amount of data for reservation, a start date and time for providing or otherwise making the reserved data accessible, and/or a data bundle to be used for the reservation, and/or a duration for which the reserved data is accessible or is otherwise provided. The subscriber can be authenticated prior to providing the acknowledgement. The subscriber data allocation can be checked to determine whether the request can be accommodated. The method further comprises transmitting data representing a menu string for the user equipment, wherein the menu string includes data representing suggestions for a portion of a subscriber data allocation to be reserved or requested for reservation. An indication of the frequency of occurrence of a desired reservation of a portion of a subscriber data allocation can be provided. A request for reservation of a portion of a subscriber data allocation can be rejected in the event that the request is invalid, erroneous and/or non-feasible. Parameters associated with the request can be registered with an online charging system, OCS, of the network. A trigger message can be transmitted from the OCS to a Policy and Charging Rules Function of the network to activate or start a data session using a reserved portion of the subscriber data allocation.

The data session can be enforced with a predetermined minimum quality of service selected in accordance with the reserved portion of the subscriber data allocation. A quality of service for the user equipment can be reduced or otherwise modified at the end of the data session. The quality of service can be reduced by transmitting a request to the Policy and Charging Rules Function of the network to revert the user equipment to a previous or predetermined quality of service.

According to an example, there is provided a computer program product, comprising a computer usable medium having computer readable program code embodied therein, said computer readable program code adapted to be executed to implement a method for reservation of a portion of a subscriber data allocation as provided herein.

### BRIEF DESCRIPTION OF THE DRAWINGS

Embodiments will now be described, by way of example only, with reference to the accompanying drawings, in which:
Figure 1 is a schematic representation of a system according to an example;
Figure 2 is a schematic representation of a message flow between network elements according to an example;
Figure 3 is a schematic representation of a message flow between network elements according to an example;
Figure 4 is a schematic representation of a message flow between network elements according to an example; and
Figure 5 is a schematic representation of a network according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

In a wireless telecommunication network, a subscriber can be provided with a data allocation for the provision of data upload/download using user equipment such as a smart phone or computing device. Typically, on a monthly basis for example, the allocation resets so that the data allocation refreshes to a maximum value. In normal usage, a selected data allocation can be sufficient to enable the subscriber to send/receive email, browse the internet, watch video content and download movies and so on over the course of the period before a refresh. If, over the course of an allocation period (such as a week or month for example) a data allocation is exceeded, the subscriber may have the option of purchasing additional data in the form a data bundle for example in order to 'top-up' their allocation.

If a subscriber wishes to engage in a data event or session, for example, a video conference call at a predefined date and time in the future, the subscriber's data allocation may not be sufficient, at that point in time, to enable the desired service to be performed either at all or to a degree which fulfils a desired quality of service (QoS) or experience (QoE) for the subscriber, particularly if the planned data session will utilize a large amount of data. That is, the subscriber's data allocation may be exhausted (unintentionally) prior to the time that the data session is set to begin. Accordingly, the subscriber may either end up with a poor QoS or may have to recharge/top-up a data bundle to accommodate the event.

According to an example, there is provided a method, in a wireless telecommunication network, for reservation of a portion of a subscriber data allocation or allowance. For example, a reservation can be made to enable a portion of a subscriber's data allocation to be earmarked for use a predetermined date/time for a data session that the subscriber wishes or anticipates engaging in. Accordingly, a subscriber can reserve a volume of data bytes from a current subscribed data bundle (2G/3G/4G and so on) for a specific duration for a forthcoming high data usage event. In this way, no recharge to the subscriber's existing allocation for the purposes of the specified event will be required.

Some typical (non-exhaustive) examples of a data session where a higher than average QoS may be desirable include downloading/streaming video content such as a movie, which may require, for example, 2GB of data; a scheduled online class which require large volumes of data, particularly if services such as collaborative virtual spaces and so on are used; a video business conference.

By reserving a portion of a data allocation, adequate data will be available at the time it is required for a planned data session. In an example, a network operator may charge a nominal fee for such reservation.

According to an example, a subscriber can request reservation using any one of a number of different methods. For example, a command-and-control protocol such as the Unstructured Supplementary Service Data, USSD, protocol can be used to request reservation of a portion of a subscriber data allocation. Alternatively, a subscriber can use an interactive voice recognition service of a user equipment device to make a request for reservation, or use an online service. For example, a network operator may typically provide an online service to enable a subscriber to check certain aspects of subscription or tariff and/or check and modify a subscription. As part of this service, the operator may enable a user to request a reservation of a portion of a subscriber data allocation.

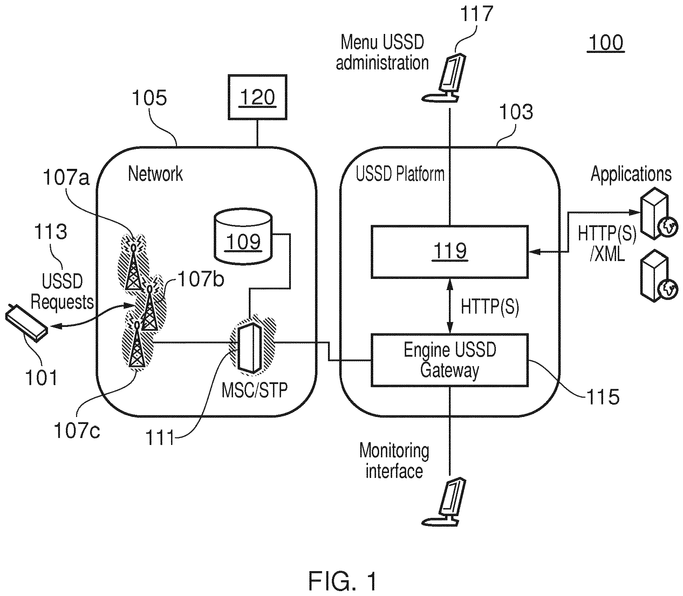

Figure 1 is a schematic representation of a system according to an example. More particularly, figure 1 is a schematic representation of a system 100 utilizing a USSD platform 103 according to an example. User equipment 101 can send/receive data to/from a network 105 via one or more network nodes 107a-c, which can be evolved nodeB's (eNBs) for example. A node can communicate with a home location register or home subscriber server 109 via a mobile switching center 111 for example, which is linked to a platform 103.

The UE 101 can transmit a request for reservation message 113 using a command-and-control protocol via the network 105 for receipt by the platform 103. In the example of figure 1, the request is a USSD request received at a USSD gateway 115. The request 113 can be a network specific USSD string that enables a menu to be generated for the UE 101. For example, a menu administration device 117 can be used to manage a set of menu items stored in a database 119. The menu items can be augmented/updated and so on. In an example, a menu item for UE 101 can include items requesting information from a subscriber. For example, multiple menu items can be provided in order to generate a menu for the device 101 in order to query a subscriber as to parameters associated with the request, such as an amount of data for reservation, a start date and time for providing or otherwise making the reserved data accessible, and/or a data bundle to be used for the reservation, and/or a duration for which the reserved data is accessible or is otherwise provided.

That is, in an example, a request 113 by a subscriber can trigger a USSD platform 103 to provide multiple menu items for the device 101 that enable a menu to be provided on or for the device 101 so as to query the subscriber in connection with the request for reservation, thereby enabling parameters associated with the request to be determined. Thus, the USSD platform 103 can transmit data representing a menu string for the UE 101. The menu string can include data representing suggestions for a portion of a subscriber data allocation to be reserved or requested for reservation.

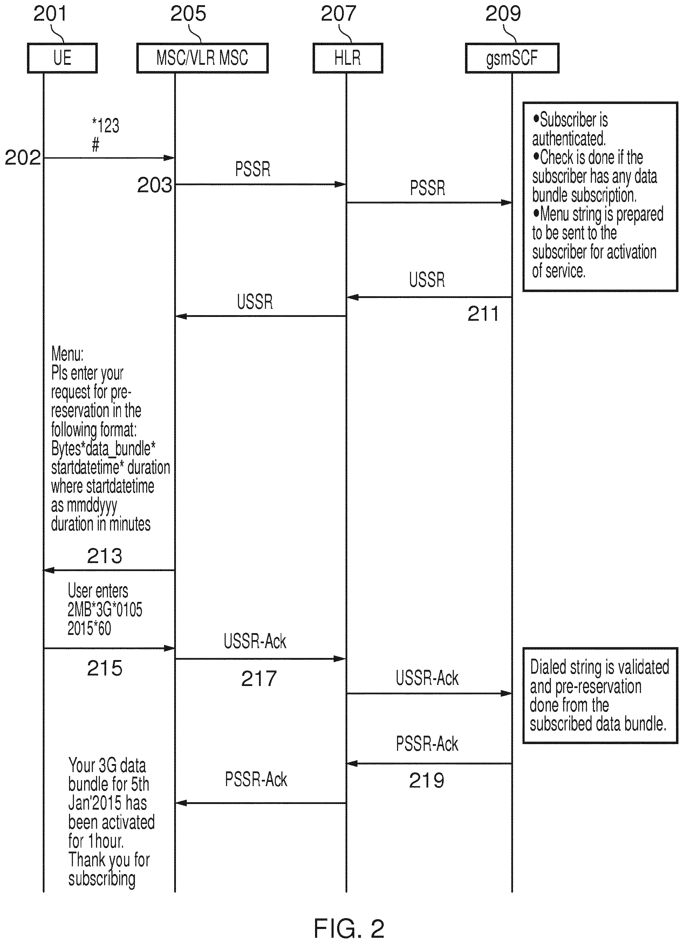

Figure 2 is a schematic representation of a message flow between network elements according to an example.

In an example, a USSD request 202 sent from UE 201 for activation of the service, that is, providing a request for reservation of a portion of a data allocation can comprise a USSD string dialed from the UE 101 such as, for example, '*123#' to request pre-reservation of volume bytes. Node 107c, with which the UE 201 is communicatively coupled, can forward a Process Unstructured Service Request (PSSR) message 203 to MSC 111, 205, which forwards the request to HLR 207 and the network service control function 209, which is operable to communicate with the USSD platform 103 to check the string and provide a menu string for use with the UE 101.

The network can authenticate the subscriber by checking that the subscriber has a data bundle or a data subscription and can respond by sending the menu string, which is in the form of an Unstructured supplementary Service Request (USSR) message 211 sent to MSC 111, which further forwards it as a USSD string to UE 201.

The subscriber thus receives a menu 213 in response asking for, for example:
- number of bytes to pre-reserve
- data bundle(3G/2G/4G)
- Start date time of data session
- duration

In an example, the network may show suggestions to the user about the number of bytes as per the service to be requested in the USSD menu string. This would help user select appropriates bytes. For example, a) one hour video conference may require 200 MB of data b) one movie download require 900 MB of data c) Two hours of webinar require about 800 MB of data usage and so on.

The operator may also opt to show smaller chunks of data bundles like (100MB/200MB/500MB/1GB) to the subscriber for pre-reservation in order to help the subscriber select an appropriate data bundle rather than exact number of bytes.

In this case, a menu string provided to the UE 101 could query the subscriber for:
- Data usage for pre-reservation- 100 MB/200 MB/500 MB/1 GB
- data bundle(3G/2G/4G)
- Start date time of data session
- Duration

In addition, the operator may also show more flexible options to the subscriber that help him schedule his daily data usage. For example, every day from 9 pm to 11 pm high bandwidth of 3G (for movie download) or weekly 2 pm to 4 pm (video conference call every Friday with a US client) and so on.

The subscriber enters the required values (215) and presses a 'send' button for example. An Unstructured supplementary Service Request acknowledgement (USSR-Ack) message 217 is sent to MSC 205, which forwards it to HLR 207, which forwards it to SCF 209.

SCF 209 checks if the values received from subscriber are valid. It may reject the request in case of a invalid/erroneous/non-feasible value. For example, one check in connection with a request could be to determine whether the specified start date/time + the duration for the request (data session) does not exceed the billing cycle. If all checks are OK then it responds back with a positive acknowledgement.

The subscriber receives an acknowledgement from the network for successful activation of the service in the form of a Process Unstructured Service Request acknowledgement (PSSR-Ack) message 219 which is sent to HLR 207 from SCF 209, and then forwarded to MSC 205 which further sends the message to UE 201 via USSD string.

The service is activated at the requested date and time and for the duration specified by the subscriber. On reception of requests from the subscriber, an online charging system (OCS) 120 of the network registers the pre-reservation requests in its database. At the time of activation of the service, OCS 120 triggers a change in QoS using the Policy and Charging Rules Function (PCRF) of the network, and at the end of the session, OCS triggers PCRF again for the normal QoS enforcement. That is, the data session is enforced with a predetermined minimum quality of service selected in accordance with the reserved portion of the subscriber data allocation, and at the end of the specified data session the quality of service for the user equipment is reduced, for example by transmitting a request to the Policy and Charging Rules Function of the network to revert the user equipment to a previous or predetermined quality of service.

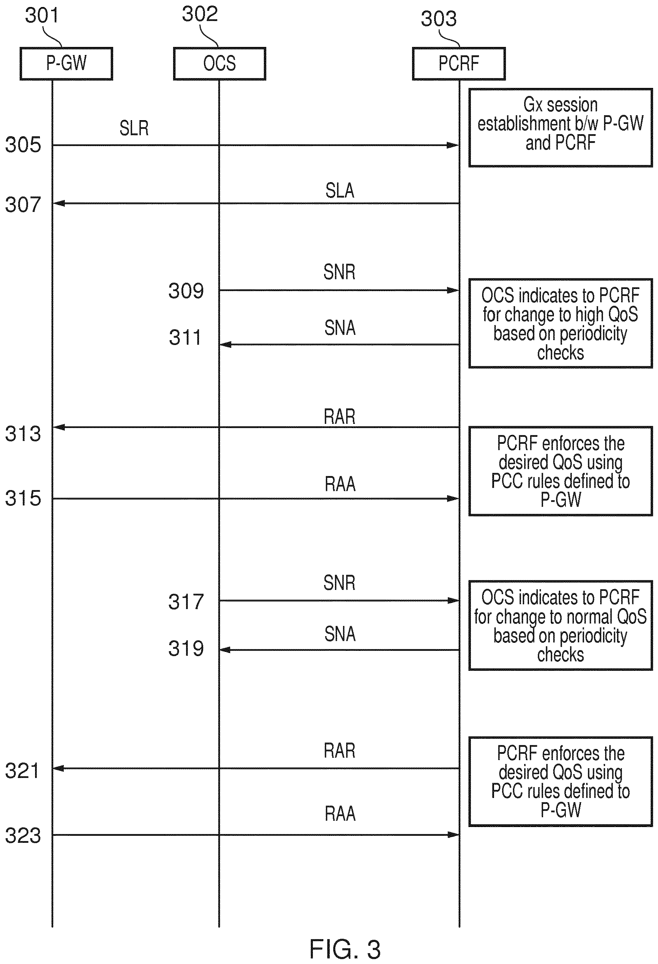

Figure 3 is a schematic representation of a message flow between network elements according to an example. More particularly, figure 3 is a message flow representation during a data session according to an example. P-GW 301 (PDN gateway) maintains a Gx session with PCRF 303 using an SLR (Spending Limit Request) 305. OCS 302 periodically checks (for example once every 1-60s) and indicates when the predetermined time interval, which was the subject of the reservation request, is about to start (i.e. when high QoS needs to be provided for pre-reserved bandwidth). The OCS provides an indication that the predefined time interval is about to start to PCRF 303, and PCRF 303 can transmit a service level acknowledgement message 307 to P-GW 301. In an example, the OCS can provide an indication to PCRF for the predefined time interval via a SNR message. The SLA message 307 can be an acknowledgment for the receipt of SLR message by the OCS.

OCS 302 sends a SNR (Spend Notification Request) message 309 to PCRF 303 (indicating change in QoS) containing bundle information along with subscriber information, which can be acknowledged (SNA, 311). PCRF 303 sends a RAR (Re-Authorization Request) message 313 to P-GW 301 with new QoS values according to PCC rules defined at the PCRF 303. Receipt of message 313 is acknowledged by message 315 (RAA). The P-GW 301 enforces the PCC rules and the user is provided with the desired/requested QoS at the predetermined time interval. At the end of the predefined interval for the service/data session, OCS 302 triggers PCRF 303 using an SNR message 317 (receipt of which is acknowledged with message 319) indicating a change in QoS to the older value, that is, to the QoS that was in place before the data session. PCRF 303 sends a RAR message 321 to P-GW 301 with the previous QoS value, and this can be acknowledged using a message 323. The P-GW 301 enforces the old QoS and the subscriber is reverted to the previous (typically lower) QoS.

In addition to activation of the subscription (i.e. requesting activation of a reserved portion of data allocation), the subscriber can also have an option to cancel the subscription.

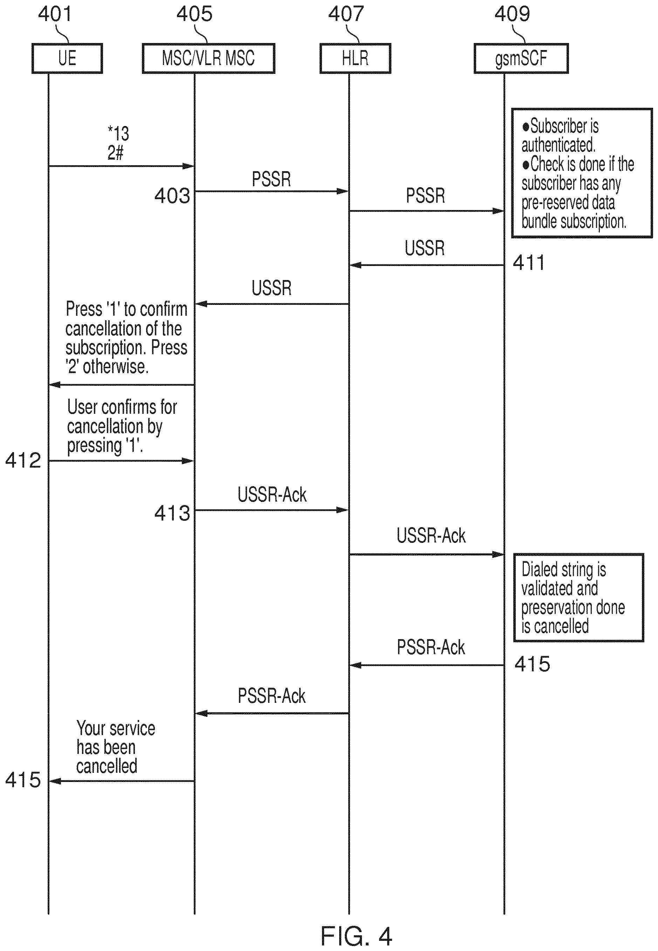

Figure 4 is a schematic representation of a message flow between network elements according to an example. More particularly, figure 4 is a message flow representation in connection with subscription cancellation according to an example.

In order to effect cancellation of a previously made request for reservation, a subscriber can dial a USSD string using their UE 401. For example, a USSD string '*132#' can be used to request cancellation of pre-reserved bytes. A USSD string is sent from UE 401 to MSC 405. MSC 405 then sends a Process Unstructured Service Request (PSSR) message 403 to SCF 409 via HLR 407. The network authenticates the subscriber, for example by checking that the subscriber has a valid pre-reserved data bundle or a data subscription. The network (SCF 409) sends a request for confirmation from the subscriber for cancellation of this service in the form of an Unstructured supplementary Service Request (USSR) message 411 sent to UE 401 via HLR 407 and MSC 405. The subscriber can confirm the request for cancellation in response to a query on UE device 401, such as by selecting a specific number to confirm (or otherwise) the request which can be sent to the network using a 'send' button or similar of the UE 401. As depicted in figure 4, a user can be prompted to press the numeral 1 to confirm cancellation, or 2 otherwise, followed by sending the selection. In the example of figure 4, subscriber wishes to cancel the request and so 1 is sent (412).

An Unstructured supplementary Service Request Acknowledgement (USSR-Ack) message 413 is then sent to SCF 409 via MSC 405 and HLR 407, and the subscriber receives an acknowledgement 415 from the network confirming successful cancellation of the request, which can be provided by way of a Process Unstructured Service Request Acknowledgement (PSSR-Ack) message sent to the UE 401 via HLR 407 and MSC 405. The data relating to the request can be removed from the OCS database.

As a subscriber may or may not have high QoS bundle, there may be several use cases. For example, a subscriber may have a limited Data plan. A request for reservation can be accommodated if the subscriber has sufficient balance and a request can therefore be granted by OCS. If a subscriber has a limited Data plan but does not have sufficient balance, a request for reservation can be rejected by OCS. In the case that a subscriber has a limited Data plan and a request for reservation is made, OCS may reserve all of the allocated quota for the subscriber in which case further requests should fail.

If a subscriber has an unlimited Data plan and requests reservation at higher QoS, the request can be granted by OCS providing that the data plan provides sufficient quota of high bandwidth QoS. If the subscriber has an unlimited Data plan and requests reservation at a high QoS but there is insufficient quota for the same, the request can be rejected by OCS. In the case of a subscriber with an unlimited Data plan who makes a request for reservation at a high QoS, OCS can grant all of the subscriber's quota of high QoS for reservation and PCRF can initiate procedures to switch from high QoS to low QoS values for other events at other times/on other dates in order to preserve the quota for the future data session.

In the event of a subscriber with an unlimited Data plan who requests reservation at a high QoS, OCS can grant all of the subscriber's quota of High QoS such that other events on other dates are provided at a relatively lower QoS . When the high usage event (data session) is triggered, PCRF can initiate procedures to switch from the relatively lower QoS to the relatively higher QoS.

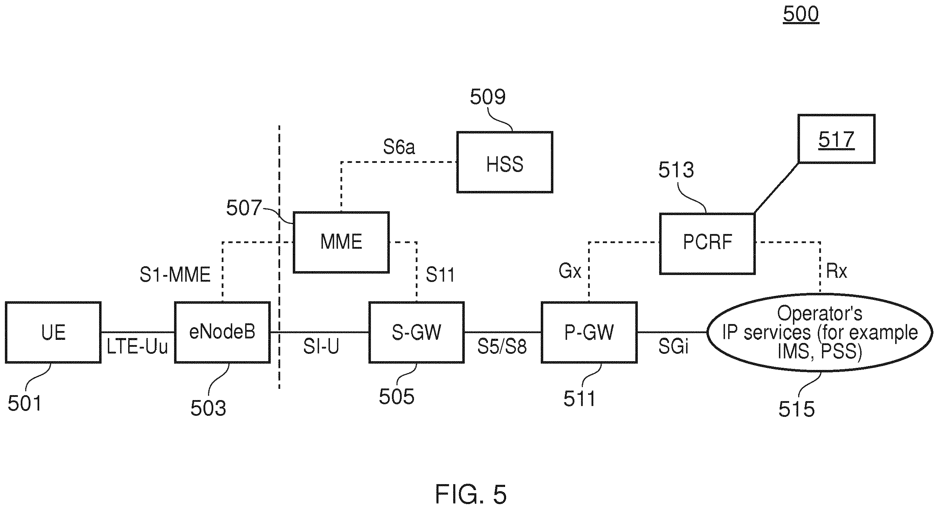

Figure 5 is a schematic representation of a network according to an example. UE 501 is communicatively coupled with a node 503. The node 503 is linked to a serving gateway 505 and a mobility management entity 507, which itself is linked to home subscriber server (HSS) 509. The serving gateway 505 is linked to the P-GW 511, which is linked to PCRF 513 as well as the network operator's IP service platform 515.

According to an example, a method, in a wireless telecommunication network 500 is provided for reservation of a portion of a subscriber data allocation. A request for reservation message is transmitted from user equipment 501 using a command-and-control protocol, and an acknowledgement to the request for reservation message is provided that includes data representing a query for parameters associated with the request. For example, message 211 that provides menu 213. The subscriber can provide an indication of the parameters of the request in response to the query, and in the event that the indicated parameters for the request are valid, the requested portion of the subscriber data allocation can be reserved for the subscriber according to the indicated parameters.

In an example, the command-and-control protocol is the Unstructured Supplementary Service Data, USSD, protocol, and the request for reservation message can be a network specific USSD string, such as that specified above for example, although it will be appreciated that other suitable strings can be used. The parameters associated with the request include the amount of data for reservation, a start date and time for providing or otherwise making the reserved data accessible, and/or a data bundle to be used for the reservation, and/or a duration for which the reserved data is accessible or is otherwise provided. For example, parameters can be sent in the form of a message 215, which specifies the parameters of the request in the form a string which can be provided as a USSR acknowledgement message.

If, according to a subscriber data allocation, the request can be accommodated, and the details (parameters) of the request can be stored in OCS 517. In an example, in response to a request, the network can transmit data to the UE 501 representing a menu string for the user equipment. The menu string can include data representing suggestions for a portion of a subscriber data allocation to be reserved or requested for reservation. In an example, a subscriber may also provide an indication of the frequency of occurrence of a desired reservation of a portion of a subscriber data allocation. For example, if the subscriber knows that they will be downloading video content every Saturday evening, a recurring request can be provided, or a single request specifying multiple occurrences can be provided.

The PCRF 513 can enforce a data session with a predetermined minimum quality of service selected in accordance with the reserved portion of the subscriber data allocation, and a quality of service for the user equipment 501 can be reduced at the end of the data session. For example, the quality of service can be reduced by transmitting a request to the Policy and Charging Rules Function 513 of the network 500 to revert the user equipment 501 to a previous or predetermined quality of service.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method for reserving a portion of subscriber data allocation for a future data session, the method comprising:
transmitting a request (202) for reservation message from user equipment (201) using a command-and-control protocol;
providing an acknowledgement (211) to the request for reservation message, the acknowledgement including data representing a query for parameters (213) associated with the request;
providing an indication of the parameters (215) of the request in response to the query;
determining the validity of the indicated parameters for the request; and
in the event that the indicated parameters for the request are valid, reserving (219) a portion of subscriber data allocation according to the indicated parameters for the future data session.

2. A method as claimed in claim 1, wherein the command-and-control protocol is the Unstructured Supplementary Service Data, USSD, protocol (113), and wherein the request for reservation message is a network specific USSD string.

3. A method as claimed in claim 1, wherein the command-and-control protocol is an interactive voice response, IVR, protocol or wherein the request for reservation message is executed using web-based service.

4. A method as claimed in any of claims 1 to 3, wherein the parameters associated with the request include the amount of data for reservation, a start date and time for providing or otherwise making the reserved data accessible, and/or a data bundle to be used for the reservation, and/or a duration for which the reserved data is accessible or is otherwise provided.

5. A method as claimed in any preceding claim, further including authenticating the subscriber prior to providing the acknowledgement.

6. A method as claimed in any preceding claim, further including checking the subscriber data allocation to determine whether the request can be accommodated.

7. A method as claimed in any preceding claim, further comprising:
transmitting data representing a menu string for the user equipment, wherein the menu string includes data representing suggestions for a portion of a subscriber data allocation to be reserved or requested for reservation.

8. A method as claimed in any preceding claim, further comprising providing an indication of the frequency of occurrence of a desired reservation of a portion of a subscriber data allocation.

9. A method as claimed in any preceding claim, further comprising rejecting a request for reservation of a portion of a subscriber data allocation in the event that the request is invalid, erroneous and/or non-feasible.

10. A method as claimed in any preceding claim, further comprising:
registering parameters associated with the request with an online charging system, OCS (120), of the network (105).

11. A method as claimed in claim 10, further comprising:
transmitting, from the OCS (302), a trigger message (309) to a Policy and Charging Rules Function (303) of the network to activate or start a data session using a reserved portion of the subscriber data allocation.

12. A method as claimed in claim 11, wherein the data session is enforced (313) with a predetermined minimum quality of service selected in accordance with the reserved portion of the subscriber data allocation.

13. A method as claimed in claim 11 or 12, further comprising reducing a quality of service (321) for the user equipment at the end of the data session.

14. A method as claimed in claim 13, wherein the quality of service is reduced by transmitting a request (317) to the Policy and Charging Rules Function of the network to revert the user equipment to a previous or predetermined quality of service.

15. A computer program product, comprising a computer usable medium having computer readable program code embodied therein, said computer readable program code adapted to, when executed by a computer, cause the computer to perform the method for reservation of a portion of a subscriber data allocation as claimed in any preceding claim.

## Patentansprüche

1. Verfahren zur Reservierung eines Teils einer Teilnehmerdatenzuweisung für eine künftige Datensitzung, wobei das Verfahren umfasst:
Senden einer Anforderung (202) einer Reservierungsnachricht von einer Benutzereinrichtung (201) unter Verwendung eines Befehls- und Steuerungsprotokolls;
Bereitstellen einer Bestätigung (211) auf die Anforderung der Reservierungsnachricht, wobei die Bestätigung Daten umfasst, die eine Abfrage von Parametern (213) darstellen, die mit der Anforderung assoziiert sind;
Bereitstellen einer Angabe der Parameter (215) der Anforderung in Reaktion auf die Abfrage;
Bestimmen der Gültigkeit der angegebenen Parameter für die Anforderung; und
Reservieren (219), falls die angegebenen Parameter für die Anforderung gültig sind, eines Teils der Teilnehmerdatenzuweisung gemäß den angegebenen Parametern für die künftige Datensitzung.

2. Verfahren nach Anspruch 1, wobei das Befehls- und Steuerungsprotokoll das USSD (unstrukturierte Zusatzdienstdaten)-Protokoll (113) ist, und wobei die Anforderung der Reservierungsnachricht eine netzwerkspezifische USSD-Zeichenfolge ist.

3. Verfahren nach Anspruch 1, wobei das Befehls- und Steuerungsprotokoll ein IVR (interaktive Sprachantwort)-Protokoll ist, und wobei die Anforderung der Reservierungsnachricht unter Verwendung eines webbasierten Dienstes ausgeführt wird.

4. Verfahren nach einem der Ansprüche 1 bis 3, wobei die mit der Anforderung assoziierten Parameter die Menge von Daten für die Reservierung, ein Startdatum und eine Startzeit zum Bereitstellen oder anderweitigen Verfügbarmachen der reservierten Daten und/oder ein Datenbündel, das zur Reservierung verwendet werden soll, und/oder eine Dauer umfassen, für welche die Daten zugänglich sind oder anderweitig bereitgestellt werden.

5. Verfahren nach einem der vorhergehenden Ansprüche, ferner umfassend ein Authentifizieren des Teilnehmers vor dem Bereitstellen der Bestätigung.

6. Verfahren nach einem der vorhergehenden Ansprüche, ferner umfassend ein Prüfen der Teilnehmerdatenzuweisung, um zu bestimmen, ob der Anforderung Rechnung getragen werden kann.

7. Verfahren nach einem vorhergehenden Ansprüche, ferner umfassend:
Senden von Daten, die eine Menüzeichenfolge für die Benutzereinrichtung darstellen, wobei die Menüzeichenfolge Daten umfasst, die Vorschläge für einen Teil einer Teilnehmerdatenzuweisung darstellen, die reserviert werden soll oder dessen Reservierung angefordert werden soll.

8. Verfahren nach einem vorhergehenden Ansprüche, ferner umfassend ein Bereitstellen einer Angabe der Häufigkeit des Auftretens einer gewünschten Reservierung eines Teils einer Teilnehmerdatenzuweisung.

9. Verfahren nach einem vorhergehenden Ansprüche, ferner umfassend ein Zurückweisen einer Anforderung einer Reservierung eines Teils einer Teilnehmerdatenzuweisung, falls die Anforderung ungültig, fehlerhaft und/der undurchführbar ist.

10. Verfahren nach einem vorhergehenden Ansprüche, ferner umfassend:
Registrieren von Parametern, die mit der Anforderung assoziiert sind, bei einem Online-Abrechnungssystem, OCS, (120) des Netzwerks (105).

11. Verfahren nach Anspruch 10, ferner umfassend:
Senden vom OCS (302) einer Auslösenachricht (309) an eine Richtlinien- und Abrechnungsregelfunktion (303) des Netzwerks, um eine Datensitzung unter Verwendung eines reservierten Teils der Teilnehmerdatenzuweisung zu aktivieren oder zu starten.

12. Verfahren nach Anspruch 11, wobei die Datensitzung mit einer vorgegebenen Mindestdienstqualität, die gemäß dem reservierten Teil der Teilnehmerdatenzuweisung ausgewählt wird, erzwungen wird (313).

13. Verfahren nach Anspruch 11 oder 12, ferner umfassend ein Herabsetzen einer Dienstqualität (321) für die Benutzereinrichtung am Ende der Datensitzung.

14. Verfahren nach Anspruch 13, wobei die Dienstqualität durch Senden einer Anforderung (317) an die Richtlinien- und Abrechnungsregelfunktion des Netzwerks zum Zurücksetzen der Benutzereinrichtung auf eine vorherige oder vorgegebene Dienstqualität herabgesetzt wird.

15. Computerprogrammprodukt, umfassend ein durch einen Computer verwendbares Medium, das computerlesbaren Programmcode darauf enthalten aufweist, wobei der computerlesbare Programmcode so ausgelegt ist, dass er bei Ausführung durch einen Computer den Computer zum Durchführen des Verfahrens zur Reservierung eines Teils einer Teilnehmerdatenzuweisung nach einem der vorhergehenden Ansprüche veranlasst.

## Revendications

1. Procédé pour réserver une partie d'une attribution de données d'abonné pour une session de données future, le procédé comprenant :
la transmission d'une demande (202) de message de réservation depuis un équipement utilisateur (201) au moyen d'un protocole de commande et de contrôle ;
la fourniture d'un accusé de réception (211) à la demande de message de réservation, l'accusé de réception comprenant des données représentant une requête de paramètres (213) associés à la demande ;
la fourniture d'une indication des paramètres (215) de la demande en réponse à la requête ;
la détermination de la validité des paramètres indiqués pour la demande ; et
dans le cas où les paramètres indiqués pour la demande sont valides, la réservation (219) d'une partie de l'attribution de données d'abonné en fonction des paramètres indiqués pour la session de données future.

2. Procédé tel que revendiqué dans la revendication 1, dans lequel le protocole de commande et de contrôle est le protocole de service supplémentaire pour données non structurées, USSD, (113) et dans lequel la demande de message de réservation est une chaîne USSD spécifique au réseau.

3. Procédé tel que revendiqué dans la revendication 1, dans lequel le protocole de commande et de contrôle est un protocole de réponse vocale interactive, IVR, ou dans lequel la demande de message de réservation est exécutée au moyen d'un service basé sur le Web.

4. Procédé tel que revendiqué dans l'une quelconque des revendications 1 à 3, dans lequel les paramètres associés à la demande comprennent la quantité de données pour la réservation, une date et une heure de début pour fournir, ou sinon, rendre accessibles les données réservées, et/ou un forfait de données à utiliser pour la réservation, et/ou une durée pendant laquelle les données réservées sont accessibles, ou sinon, fournies.

5. Procédé tel que revendiqué dans l'une quelconque des revendications précédentes, comprenant en outre l'authentification de l'abonné avant de fournir l'accusé de réception.

6. Procédé tel que revendiqué dans l'une quelconque des revendications précédentes, comprenant en outre la vérification de l'attribution des données d'abonné pour déterminer si la demande peut être satisfaite.

7. Procédé tel que revendiqué dans l'une quelconque des revendications précédentes, comprenant en outre :
la transmission des données représentant une chaîne de menu pour l'équipement utilisateur, où la chaîne de menu comprend des données représentant des suggestions pour une partie d'une attribution de données d'abonné à réserver ou à demander pour réservation.

8. Procédé tel que revendiqué dans l'une quelconque des revendications précédentes, comprenant en outre la fourniture d'une indication de la fréquence des occurrences d'une réservation souhaitée d'une partie d'une attribution de données d'abonné.

9. Procédé tel que revendiqué dans l'une quelconque des revendications précédentes, comprenant en outre le rejet d'une demande de réservation d'une partie d'une attribution de données d'abonné dans le cas où la demande n'est pas valide, est erronée et/ou est irréalisable.

10. Procédé tel que revendiqué dans l'une quelconque des revendications précédentes, comprenant en outre : l'enregistrement des paramètres associés à la demande avec un système de tarification en ligne, OCS, (120) du réseau (105).

11. Procédé tel que revendiqué dans la revendication 10, comprenant en outre :
la transmission, depuis l'OCS (302), d'un message de déclenchement (309) à une fonction de politique et de règles de tarification (303) du réseau pour activer ou démarrer une session de données au moyen d'une partie réservée de l'attribution de données d'abonné.

12. Procédé tel que revendiqué dans la revendication 11, dans lequel la session de données est exécutée (313) avec une qualité de service minimale prédéterminée sélectionnée conformément à la partie réservée de l'attribution de données d'abonné.

13. Procédé tel que revendiqué dans la revendication 11 ou la revendication 12, comprenant en outre la réduction d'une qualité de service (321) pour l'équipement utilisateur à la fin de la session de données.

14. Procédé tel que revendiqué dans la revendication 13, dans lequel la qualité de service est réduite en transmettant une demande (317) à la fonction de politique et de règles de tarification du réseau pour ramener l'équipement utilisateur à une qualité de service antérieure ou prédéterminée.

15. Produit programme informatique, comprenant un support utilisable par ordinateur sur lequel est incorporé un code de programme lisible par ordinateur, ledit code de programme lisible par ordinateur étant adapté pour, lorsqu'il est exécuté par un ordinateur, amener l'ordinateur à exécuter le procédé de réservation d'une partie d'une attribution de données d'abonné, tel revendiqué dans l'une quelconque des revendications précédentes.
